# EUROPEAN PATENT SPECIFICATION

(11) **EP 2 444 124 B1**
(45) Date of publication and mention of the grant of the patent: **05.11.2014**
(21) Application number: 10831060.8
(22) Date of filing: 03.07.2010
(51) Int. Cl.: A62C 5/00, A62C 31/05, A62C 35/02, A62C 99/00

(54) **HOT AEROSOL FIRE-EXTINGUISHING DEVICE WITH THERMAL PROTECTIVE LAYER CAPABLE OF RESISTING HIGH-TEMPERATURE ABLATION**
FEUERLÖSCHER MIT HEISSEM AEROSOL UND WÄRMESCHUTZSCHICHT FÜR BESTÄNDIGKEIT GEGEN HOCHTEMPERATUR-ABLEITUNGEN
DISPOSITIF À BASE D'AÉROSOL CHAUD POUR ÉTEINDRE LES INCENDIES ÉQUIPÉ D'UNE COUCHE DE PROTECTION THERMIQUE CAPABLE DE RÉSISTER À UNE ABLATION HAUTE TEMPÉRATURE

(30) Priority: 20.11.2009 CN 200910219106
(43) Date of publication of application: 25.04.2012
(73) Proprietor: Shaanxi J&R Fire Fighting Co., Ltd, Shaanxi 710075 (CN)
(72) Inventor: GUO, Hongbao, Shaanxi 710075 (CN); ZHANG, Sanxue, Shaanxi 710075 (CN); MA, Chenggong, Shaanxi 710075 (CN); ZHANG, Weipeng, Shaanxi 710075 (CN)
(74) Representative: Hickinson, Katie Louise
(86) International application number: PCT/CN2010/074963
(87) International publication number: WO 2011/060644

(56) References cited:
- WO-A2-00/03765
- WO-A2-2007/130498
- CN-A- 1 213 679
- CN-A- 1 213 679
- CN-A- 1 912 005
- CN-A- 101 700 427
- CN-C- 100 509 961
- CN-Y- 2 519 680
- CN-Y- 201 070 502
- CN-Y- 201 070 502
- CN-Y- 201 239 453
- CN-Y- 201 239 453
- US-B2- 7 389 825
- QU, YANBIN ET AL.: "Study on High Heat-resistant", FIRE RETARDANT SILICONE RUBBER, SILICONE MATERIAL, [Online] vol. 20, no. 3, June 2006 (2006-06), pages 111-113, XP002696740, Retrieved from the Internet: URL:http://en.cnki.com.cn/Article_en/CJFDT OTAL-YJGC200603005.htm> [retrieved on 2013-05-07]
- QU, YANBIN ET AL.: 'Study on High Heat-resistant' FIRE RETARDANT SILICONE RUBBER, SILICONE MATERIAL vol. 20, no. 3, June 2006, pages 111 - 113

## Description

### Field of the Invention

The present invention provides an aerosol fire suppression apparatus and especially relates to an aerosol fire suppression apparatus with high temperature ablation resistant insulating layer.

### Background of the Invention

Aerosol fire suppression is a fire suppression technique based on initiating explosive devices that has been developed in recent years, with advantages such as simple structure, low cost, high fire suppression efficacy and free of secondary pollution, etc. The fire suppression mechanism of aerosol is: the fire suppression agent releases a great deal of metal ions and oxides in chemical reaction, and these metal ions and oxides react with the active groups in the flames, and thereby block the chain reaction in the flames and get the object of fire suppression. A great deal of heat is generated in the chemical reaction that produces fire suppression aerosol, and may cause secondary fire if the wall temperature of the apparatus is too high. Therefore, the fire suppression apparatus must have a heat insulating material to prevent extremely high wall temperature.

In the prior art, for example, an aerosol fire suppression apparatus that comprises enclosure, cooling area, reaction chamber and thermal insulating layer is disclosed in Patent Application No. 200820110213.X and 02278270.2, wherein the heat insulating material is aluminum silicate plates and rubber plates., Several aerosol fire suppression apparatuses are also disclosed in Patent Application No. 97248609.7, 9912556.4, 01277738.2, and 02262244.6. These apparatuses are similar to each other in structure, and most of them utilize aluminum silicate fibers as the heat insulating material. It is proved that the heating insulation performance of a fire suppression apparatus that utilizes aluminum silicate plates, rubber plates, or aluminum silicate fibers as heat the insulating material is just so-so, and is barely enough to meet the technical specification for the wall temperature of aerosol fire suppression apparatus; in addition, it is a common phenomenon that the enclosure of fire suppression apparatus is ablated. In these apparatuses, the thermal insulating layer is usually packed manually, resulting in three drawbacks: first, the process is complicated and the operating efficiency is low; second, the packing is uneven, resulting in unbalanced heat insulation effect, and therefore the apparatus is often ablated partially; third, the packing amount is difficult to control and normalized.

CN 201070502 discloses an apparatus according to the preamble of appended claim 1.

### Summary of the Invention

To overcome the drawbacks in existing aerosol fire suppression apparatuses, such as poor heat insulation effect and complicated packing process of the thermal insulating layer, the present invention provides an aerosol fire suppression apparatus that is resistant to high temperature and ablation and has high heat insulation performance, meets the wall temperature criterion specified in the industry standard GA499.1-2004, and can avoid ablation on the surface.

The present invention as defined in appended claim 1 provides an aerosol fire suppression apparatus with a high temperature ablation resistant thermal insulating layer, comprising enclosure, thermal insulating layer, aerosol generating chemical agent, cooling material and initiator, wherein the thermal insulating layer is made of silicone rubber material, comprising silicone rubber substrate by 30-50 wt%, cross-linking agent by 1-10 wt%, fire retarding agent by 5-50 wt%, high temperature resistant material by 5-50 wt%, coupling agent by 0.1-5 wt% and catalyst by 0.1-5 wt%.

Furthermore, the thermal insulating layer is produced from silicone rubber material by casting.

Furthermore, there are initiator, cooling material, aerosol generating chemical agent and screen layer inside the thermal insulating layer; the thermal insulating layer is fastened in the enclosure of the apparatus; a cover is arranged above the screen layer; an aerosol jet orifice is arranged on the cover.

Furthermore, the silicone rubber substrate is methyl-silicone oil 201, silicone rubber 106 or silicone rubber 107.

Furthermore, the cross-linking agent is phenyl-ethynyl polysiloxane or ethyl orthosilicate.

Furthermore, the coupling agent isγ-aminopropyltriethoxysilane, γ-glycidyletheroxy propyltrimethoxysilane or γ-methacryloxylpropyltrimethoxysilane.

Furthermore, the fire retarding agent is Al(OH)₃, melamine, mica powder or Mg(OH)₂; the high temperature resistant material is Fe₂O₃, hydrotalcite or talcum powder.

Furthermore, the catalyst is N, N, N', N'-tetramethyl guanidine or dibutyltin dilaurate.

A preparation method of an aerosol fire suppression apparatus with a high temperature ablation resistant thermal insulating layer may comprise:
Step 1: casting aerosol generating chemical agent 4 and silicone rubber into an integral piece in a mold, and cross-linking and solidifying at room temperature, to form a thermal insulating layer 1;
Step 2: loading an initiator 2 in the chemical agent 4, filling a cooling material 3 over the initiator 2, and covering the cooling material 3 with a screen 5;
Step 3: loading the thermal insulating layer 1 that contains the aerosol generating chemical agent 4, initiator 2, and cooling material 3 into the enclosure 6 of the apparatus, and sealing the thermal insulating layer 1 with a cover 7.

Compared to manually packed aerosol fire suppression apparatuses, the aerosol fire suppression apparatus with a high temperature ablation resistant thermal insulating layer in the present invention has the following advantages: (1) the silicone rubber thermal insulating layer delivers good heat insulation effect; (2) the aerosol generating chemical agent has higher moisture resistance performance and can burn stably, without flying flame or explosive burning phenomenon; (3) the casting and assembly process is simple and suitable for mass production.

### Brief Description of the Drawings

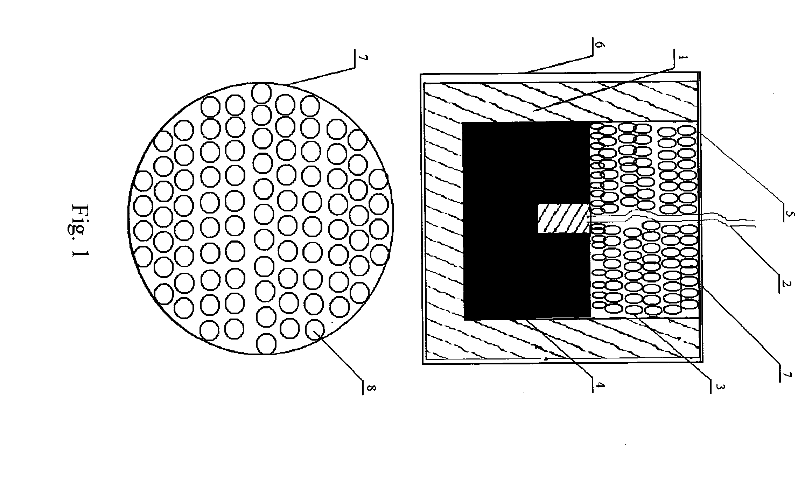

Figure 1 is a schematic structural diagram of an aerosol fire suppression apparatus with a silicone rubber thermal insulating layer.

Wherein: 1 - thermal insulating layer, 2 - initiator, 3 - cooling material, 4 - aerosol generating chemical agent 5 - screen, 6 - enclosure, 7 - cover, 8 - aerosol jet orifice.

### Detailed Description of the Embodiments

The aerosol fire suppression apparatus with a silicone rubber thermal insulating layer in the present invention will be further detailed with reference to the drawings.

As shown in Figure 1, the aerosol fire suppression apparatus in the present invention comprises enclosure 6, thermal insulating layer 1, aerosol generating chemical agent 4, cooling material 3 and initiator 2, wherein the thermal insulating layer 1 is made of a material that is different to the legacy material, i.e., the thermal insulating layer 1 is made of silicone rubber material, comprising silicone rubber substrate by 30-50 wt%, cross-linking agent by 1-10 wt%, fire retarding agent by 5-50 wt%, high temperature resistant material by 5-50 wt%, coupling agent by 0.1-5 wt%, and catalyst by 0.1-5 wt%.

The thermal insulating layer 1 is fixed in the enclosure 6 and contains initiator 2, cooling material 3, aerosol generating chemical agent 4 and screen 5. A cover 7 is arranged above the screen 7 and an aerosol jet orifice 8 is arranged on the cover 7.

### Example 1

100 g silicone rubber 106 is agitated to homogeneous state and 500g aerosol generating chemical agent of strontium salt in Φ 65 mm diameter is loaded into a mold. In the mold the silicone rubber 106 is casted and vulcanized for 24 h to solidify the cast piece. Then an initiator is loaded into the generating chemical agent and a cooling material 3 is filled over the initiator before the cooling material is covered with a screen. The thermal insulating layer 1 that contains the aerosol generating chemical agent 4, initiator 2 and cooling material 3 is fastened in the enclosure 6 of the apparatus and the thermal insulating layer 1 in the enclosure 6 is sealed with a cover 7. After the apparatus is initiated, aerosol will spurt out of an aerosol jet orifice 8 on the cover 7. The temperatures at the jet orifice, side walls and bottom of the apparatus are measured with a temperature sensing probe. Maximum temperature at the jet orifice: 84 °C; maximum temperature at the side walls: 117 °C; maximum temperature at the bottom: 145 °C.

### Example 2

150g silicone rubber 107 is agitated to homogeneous state and 1000g aerosol generating chemical agent of potassium salt in Φ 75 mm diameter is loaded into a mold. In the mold the silicone rubber 107 is casted and vulcanized for 12 h to solidify the cast piece. Then an initiator 2 is loaded into the generating chemical agent 4 and a cooling material 3 is filled over the initiator before the cooling material is covered with a screen 5. The thermal insulating layer 1 that contains the aerosol generating chemical agent 4, initiator 2 and cooling material 3 is fastened in the enclosure 6 of the apparatus and the thermal insulating layer 1 in the enclosure 6 is sealed with a cover 7. After the apparatus is initiated, the temperatures at the jet orifice, side walls, and bottom of the apparatus are measured with a temperature sensing probe. Maximum temperature at the jet orifice: 122 °C; maximum temperature at the side walls: 130 °C; maximum temperature at the bottom: 132 °C.

When a fire signal is received, the aerosol fire suppression apparatus with a high temperature ablation resistant thermal insulating layer in the present invention is initiated by the initiator 2. The aerosol generating chemical agent is ignited and fire suppression aerosol is produced, which spurt out of the aerosol jet orifice 8 get the object of fire suppression. The heat released along the jet orifice is absorbed by the cooling material 3 and the heat near the side walls is isolated by the thermal insulating layer 1; therefore, the temperature values at the jet orifice, side walls and bottom can meet the criterion specified in the standard GA499.1-2004.

## Claims

1. An aerosol fire suppression apparatus with a high temperature ablation resistant thermal insulating layer, comprising an enclosure (6), a thermal insulating layer (1), an aerosol generating chemical agent (4), a cooling material (3), and an initiator (2), **characterized in that** the thermal insulating layer (1) is made of silicone rubber material, comprising silicone rubber substrate by 30-50 wt%, cross-linking agent by 1-10 wt%, fire retarding agent by 5-50 wt%, high temperature resistant material by 5-50 wt%, coupling agent by 0.1-5 wt% and catalyst by 0.1-5 wt%; and
the cross-linking agent is phenyl ethynyl polysiloxane or ethyl orthosilicate, the coupling agent is γ-aminopropyltriethoxysilane, γ-glycidyletheroxypropyltrimethoxysilane or γ-methacryloxyl propyltrimethoxysilane, the fire retarding agent is Al(OH)₃, melamine, mica powder or Mg(OH)₂, the high temperature resistant material is Fe₂O₃, hydrotalcite, or talcum powder, and the catalyst is N, N, N', N'-tetramethyl guanidine or dibutyltin dilaurate.

2. The aerosol fire suppression apparatus with a high temperature ablation resistant thermal insulating layer according to claim 1, **characterized in that** the thermal insulating layer (1) is produced from silicone rubber material by casting.

3. The aerosol fire suppression apparatus with a high temperature ablation resistant thermal insulating layer according to claim 2, **characterized in that** there are initiator (2), cooling material (3), aerosol generating chemical agent (4) and screen (5) inside the thermal insulating layer (1); the thermal insulating layer (1) is fastened in the enclosure (6); a cover (7) is arranged above the screen (5), and an aerosol jet orifice (8) is arranged on the cover (7).

## Patentansprüche

1. Aerosol-Feuerlöschvorrichtung mit einer gegen Hochtemperatur-Ablation beständigen Wärmeisolierschicht, umfassend ein Gehäuse (6), eine Wärmeisolierschicht (1), eine aerosolerzeugende Chemikalie (4), ein Kühlmaterial (3) und einen Initiator (2), **dadurch gekennzeichnet, dass** die Wärmeisolierschicht (1) aus einem Silikonkautschukmaterial gefertigt ist, das ein Silikonkautschuksubstrat in einer Menge von 30 bis 50 Gew.-%, ein Vernetzungsmittel in einer Menge von 1 bis 10 Gew.-%, ein Feuerschutzmittel in einer Menge von 5 bis 50 Gew.-%, ein hochtemperaturbeständiges Material in einer Menge von 5 bis 50 Gew.-%, einen Haftvermittler in einer Menge von 0,1 bis 5 Gew.-% und einen Katalysator in einer Menge von 0,1 bis 5 Gew.% umfasst; und
das Vernetzungsmittel Phenylethynylpolysiloxan oder Ethylorthosilicat ist, der Haftvermittler γ-Aminopropyltriethoxysilan, γ-Glycidyletheroxypropyltrimethoxysilan oder γ-Methacryloxylpropyltrimethoxysilan ist, das Feuerschmutzmittel Al(OH)₃, Melamin, Glimmerpulver oder Mg(OH)₂ ist, das hochtemperaturbeständige Material Fe₂O₃, Hydrotalcit oder Talkumpulver ist und der Katalysator N,N,N',N'-Tetramethylguanidin oder Dibutyltindilaurat ist.

2. Aerosol-Feuerlöschvorrichtung mit einer gegen Hochtemperatur-Ablation beständigen Wärmeisolierschicht nach Anspruch 1, **dadurch gekennzeichnet, dass** die Wärmeisolierschicht (1) aus einem Silikonkautschukmaterial durch Gießen hergestellt wird.

3. Aerosol-Feuerlöschvorrichtung mit einer gegen Hochtemperatur-Ablation beständigen Wärmeisolierschicht nach Anspruch 2, **dadurch gekennzeichnet, dass** in der Wärmeisolierschicht (1) ein Initiator (2), ein Kühlmaterial (3), eine aerosolerzeugende Chemikalie (4) und ein Sieb (5) vorhanden sind; die Wärmeisolierschicht (1) in dem Gehäuse (6) befestigt ist; eine Abdeckung (7) über dem Sieb (5) angeordnet ist und ein Aerosolstrahlöffnung (8) auf der Abdeckung (7) angeordnet ist.

## Revendications

1. Dispositif d'extinction d'incendie du type aérosol comprenant une couche d'isolation thermique résistant à l'ablation à haute température, comprenant une enceinte (6), une couche d'isolation thermique (1), une agent chimique de génération d'aérosol (4), un matériau de refroidissement (3) et un initiateur (2), **caractérisé en ce que** la couche d'isolation thermique (1) est constituée d'un matériau de caoutchouc silicone, comprenant un substrat de caoutchouc silicone pour 30 à 50 % en poids, un agent réticulant pour 1 à 10 % en poids, un agent retardateur de flamme pour 5 à 50 % en poids, un matériau résistant aux hautes températures pour 5 à 50 % en poids, un agent de couplage pour 0,1 à 5 % en poids et un catalyseur pour 0,1 à 5 % en poids;
et
l'agent réticulant est le phényle éthynyle polysiloxane ou l'orthosilicate d'éthyle, l'agent de couplage est le γ-aminopropyltriéthoxysilane, le γ-glycidylétheroxypropyltriméthoxysilane ou le γ-méthacryloxyle propyltriméthoxysilane, l'agent retardateur de flamme est l'Al(OH)₃, la mélamine, la poudre de mica ou le Mg(OH)₂, le matériau résistant aux hautes températures est le Fe₂O₃, l'hydrotalcite ou la poudre de talc, et le catalyseur est le N, N, N', N'-tétraméthyle guanidine ou le dilaurate de dibutylétain.

2. Dispositif d'extinction d'incendie du type aérosol comprenant une couche d'isolation thermique résistant à l'ablation à haute température selon la revendication 1, **caractérisé en ce que** la couche d'isolation thermique (1) est produite à partir d'un matériau de caoutchouc silicone par coulée.

3. Dispositif d'extinction d'incendie du type aérosol comprenant une couche d'isolation thermique résistant à l'ablation à haute température selon la revendication 2, **caractérisé en ce qu'**il est prévu un initiateur (2), un matériau de refroidissement (3), un agent chimique de génération d'aérosol (4) et un écran (5) à l'intérieur de la couche d'isolation thermique (1); la couche d'isolation thermique (1) est attachée dans l'enceinte (6); un couvercle (7) est agencé au-dessus de l'écran (5), et un orifice de projection d'aérosol (8) est agencé sur le couvercle (7).
